# EUROPÄISCHE PATENTANMELDUNG

(11) **EP 0 681 987 A1**
(43) Veröffentlichungstag der Anmeldung: **15.11.1995**
(21) Anmeldenummer: 95250105.4
(22) Anmeldetag: 03.05.1995
(51) Int. Cl.: B66C 1/12, B66C 1/14

(54) **Lastaufnahme- oder Zurreinrichtung**

(30) Priorität: 11.05.1994 DE 9407926 U
(71) Anmelder: RUD-KETTENFABRIK RIEGER & DIETZ GMBH U. CO., D-73432 Aalen (DE)
(72) Erfinder: Smetz, Reinhard, Dipl. Ing. (FH), D-86720 Baldingen (DE)
(74) Vertreter: Böning, Manfred, Dr.-Ing.

(57) **Zusammenfassung**

Um eine schnelle und sichere Zuordnung von Lastaufnahme- und Anschlagmitteln einer bestimmten Güteklasse beim Zusammenstellen von Lastaufnahme- oder Zurreinrichtungen zu gewährleisten, sind sämtliche zu einer entsprechenden Einrichtung gehörenden Teile (1,2,3,5) mit einem jeweils einer bestimmten Güteklasse zugeordneten Überzug versehen, der eine Signalfarbe enthält.

## Beschreibung

Die Erfindung betrifft eine Lastaufnahme- oder Zurreinrichtung, insbesondere ein Kettengehänge, mit mindestens jeweils einem Lastaufnahmemittel und einem Anschlagmittel.

Die Lastaufnahmemittel und Anschlagmittel von Lastaufnahmeeinrichtungen müssen den Vorschriften der Berufsgenossenschaften entsprechend gekennzeichnet sein. Dies geschieht in der Praxis dadurch, daß man diverse Daten in bestimmte Teile der Lastaufnahmemittel einprägt und die Anschlagmittel dauerhaft mit Kennzeichnungsanhängern versieht, die Angaben über die Güteklasse und die Tragfähigkeit tragen. Die vorstehend geschilderten Gegebenheiten gewährleisten weitgehend, daß z.B. beim Zusammenstellen von Kettengehängen Aufhängeglieder, Kettenverkürzungsorgane und Haken der gleichen Güteklasse miteinander kombiniert werden. Wie die Erfahrung gezeigt hat, ergeben sich in der Praxis dann Probleme, wenn in ein und demselben Betrieb Anschlagmittel unterschiedlicher Güteklassen lagermäßig vorhanden sind, da in derartigen Fällen besondere Sorgfalt bei der Zusammenstellung der zu kombinierenden Teile geboten ist.

Der Erfindung liegt die Aufgabe zugrunde, das Zusammenstellen von Lastaufnahme- oder Zurreinrichtungen durch eine vereinfachte Vorauswahl der jeweils zu kombinierenden Teile zu erleichtern. Diese Aufgabe wird bei einer Lastaufnahme- oder Zurreinrichtung der in Betracht gezogenen Art erfindungsgemäß dadurch gelöst, daß sämtliche zu ihr gehörenden Teile mit einem die gleiche Güteklasse der Teile erkennbar machenden Überzug versehen sind, der eine Signalfarbe enthält.

Die erfindungsgemäße Lastaufnahme- oder Zurreinrichtung bietet den Vorteil, daß der Benutzer, der sie zusammenstellt, auf den ersten Blick erkennen kann, welche Teile zu ein und derselben Güteklasse gehören, so daß er lediglich noch für die richtige Zuordnung dieser Teile innerhalb der jeweiligen, ihm durch die Signalfarbe erkennbar gemachten Güteklasse Sorge zu tragen hat. Durch die leuchtende Signalfarbe des Überzuges wird zudem erreicht, daß beim Einsatz der Einrichtung unter ungünstigen Lichtverhältnissen, wie beispielsweise Untertage, das Wiederauffinden der Einrichtung in ihrer Gesamtheit oder auch einzelner Teile, insbesondere Ersatzteile, durch die Reflexionswirkung der Signalfarbe erleichtert wird. Schließlich erweist sich die Signalfarbe auch insofern als günstig, als sie im Sinne eines Gefahrenindikators wirkt.

Die Erfindung wird im folgenden anhand der in der beigefügten Zeichnung dargestellten Lastaufnahmeeinrichtung näher erläutert. Es zeigen:
Fig. 1 die Seitenansicht einer Lastaufnahmeeinrichtung in Form eines Einstranggehänges,
Fig. 2 die Seitenansicht eines Teiles des Gehänges und
Fig. 3 die Stirnansicht eines Einzelteiles des Gehänges.

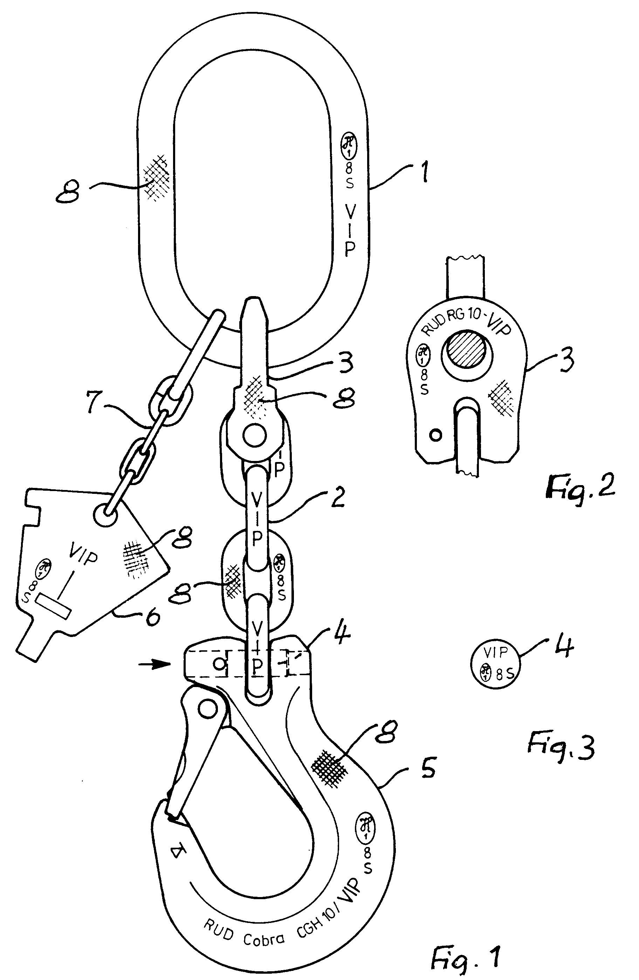

Das in Figur 1 dargestellte Gehänge besteht aus einem Aufhängeglied 1, einer das Aufhängeglied mit einem Ende eines Kettenstranges 2 verbindenden Ringgabel 3 und einem am anderen Ende des Kettenstranges 2 mit Hilfe eines Bolzens 4 befestigten Haken 5. Außerdem ist das Gehänge mit einem Kennzeichnungsanhänger 6 versehen, der über einen kurzen Kettenstrangabschnitt 7 unverlierbar mit dem Aufhängeglied 1 verbunden ist.

Sämtliche vorgenannten Teile sind an den im montierten Zustand des Gehänges sichtbaren Außenflächen mit einem in der Zeichnung durch jeweils eine Kreuzschraffur 8 angedeuteten, leuchtenden Überzug versehen, der sie als zu einer Güteklasse gehörend ausweist. Als besonders vorteilhaft, weil stark reflektierend und auffällig, hat sich eine Pinkfärbung des Überzuges erwiesen. Durch Beifügung von fluoreszierenden Komponenten zu der jeweiligen Signalfarbe läßt sich die Auffälligkeit des Überzuges noch erhöhen.

Wie aus der Zeichnung erkennbar, sind alle tragenden Teile 1 bis 5 und der Kennzeichnungsanhänger 6 außerdem in übereinstimmender Weise mit allen wesentlichen Angaben, wie beispielsweise Größen- und Herstellerangaben, gestempelt, so daß nicht nur die durch die Signalfarbe des Überzuges vereinfachte Güteklassenvor- oder -grobauswahl, sondern auch die richtige Zuordnung von Teilen innerhalb einer Güteklasse spürbar erleichtert wird.

## Patentansprüche

1. Lastaufnahme- oder Zurreinrichtung, insbesondere Kettengehänge, mit mindestens jeweils einem Lastaufnahmemittel und einem Anschlagmittel, **dadurch gekennzeichnet**, daß sämtliche zu ihr gehörenden Teile mit einem die gleiche Güteklasse der Teile (1-6) erkennbar machenden Überzug (8) versehen sind, der eine Signalfarbe enthält.

2. Lastaufnahme- oder Zurreinrichtung nach Anspruch 1, **dadurch gekennzeichnet**, daß die Farbkomponente des Überzuges (8) fluoreszierend ist.

3. Lastaufnahme- oder Zurreinrichtung nach Anspruch 1 oder 2, **dadurch gekennzeichnet**, daß der Überzug (8) pinkfarben ist.
